# EUROPÄISCHE PATENTSCHRIFT

(11) **EP 2 503 760 B1**
(45) Veröffentlichungstag und Bekanntmachung des Hinweises auf die Patenterteilung: **07.05.2014**
(21) Anmeldenummer: 11159616.9
(22) Anmeldetag: 24.03.2011
(51) Int. Cl.: H04L 29/12, H04L 29/08

(54) **Verfahren zum Einrichten eines Kommunikationsnetzes aus Geräten einer Automatisierungsanlage**
Method for setting up a communication network comprising devices of an automation assembly
Procédé de réglage d'un réseau de communication à partir d'appareils d'une installation d'automatisation

(43) Veröffentlichungstag der Anmeldung: 26.09.2012
(73) Patentinhaber: Siemens Aktiengesellschaft, 80333 München (DE)
(72) Erfinder: Merk, Stephan, 80804 München (DE)

(56) Entgegenhaltungen:
- WO-A1-2009/037074
- WO-A2-2008/120120
- DE-A1- 10 229 636
- DE-A1-102006 052 451
- DE-B3-102006 021 591
- EUGSTER PATRICK TH ET AL: "The Many Faces of Publish/Subscribe", ACM COMPUTING SURVEYS, ACM, NEW YORK, NY, US, US, Bd. 35, Nr. 2, 1. Juni 2003 (2003-06-01), Seiten 114-131, XP002424894, ISSN: 0360-0300, DOI: 10.1145/857076.857078
- ION STOICA ET AL: "Chord: A Scalable Peer-to-Peer Lookup Protocol for Internet Applications", IEEE / ACM TRANSACTIONS ON NETWORKING, IEEE / ACM, NEW YORK, NY, US, Bd. 11, Nr. 1, 1. Februar 2003 (2003-02-01), XP011077215, ISSN: 1063-6692

## Beschreibung

Die Erfindung betrifft ein Verfahren zum Einrichten eines Kommunikationsnetzes aus Geräten einer Automatisierungsanlage sowie ein entsprechendes Kommunikationsnetz und eine entsprechende Automatisierungsanlage.

Die Konfiguration bzw. Rekonfiguration von Automatisierungsanlagen in der Fertigung- bzw. Prozessautomatisierung ist komplex, zeitaufwändig und mit hohen Kosten verbunden. Im Rahmen eines sog. Engineerings wird üblicherweise zunächst die Automatisierungsanlage geplant und dann deren Automatisierung entworfen. Dabei muss auch die Kommunikationsinfrastruktur zwischen den einzelnen Geräten der Automatisierungsanlage geplant werden. Unter einem Gerät einer Automatisierungsanlage sind hier und im Folgenden beliebige Einheiten zu verstehen, welche im Rahmen des Automatisierungsprozesses an der Durchführung der Automatisierung bzw. der damit verbundenen Kommunikation beteiligt sind. Vorzugsweise umfassen diese Geräte Sensoren und Aktoren im Feld sowie Steuergeräte, welche basierend auf Daten von Sensoren entsprechende Aktoren geeignet steuern.

Zur Kommunikation zwischen den einzelnen Geräten der Automatisierungsanlage sind aus dem Stand der Technik verschiedene Protokolle bekannt. Um einen echtzeitfähigen Datenaustausch zwischen den Geräten zu gewährleisten, wird insbesondere ein Kommunikationsnetz etabliert, welches auf Industrial Ethernet beruht. Es sind dabei eine Vielzahl von Kommunikationsprotokollen bekannt, welche auf der Verwendung von Industrial Ethernet basieren, wie z.B. das Profinet-Protokoll. Im Rahmen der Kommunikation während des Betriebs der Automatisierungsanlage werden entsprechende physikalische Adressen, wie z.B. IP-Adressen und MAC-Adressen, eingesetzt, mit denen die einzelnen Geräte direkt angesprochen werden. Im Rahmen des Engineerings von Automatisierungsanlagen ist es ferner bekannt, dass zur generischen Beschreibung von Automatisierungsfunktionen anstatt von physikalischen Adressen entsprechende logische Adressen der einzelnen Geräte verwendet werden. Dabei besteht das Problem, dass zur Laufzeit bzw. beim Hochfahren der Automatisierungsanlage die logischen Adressen in geeigneter Weise in physikalische Adressen der Geräte umgesetzt werden müssen, um hierdurch einen echtzeitfähigen Betrieb der Anlage zu gewährleisten. Derzeit sind keine Verfahren bekannt, die auf einfache Weise mit möglichst geringem manuellem Aufwand eine Zuordnung der logischen Adressen zu den physikalischen Adressen der Geräte ermöglichen.

Aus der W02009/037074 A1 ist ein Verfahren bekannt, bei dem ein gattungsgemäßes Kommunikationsnetz mit einer Vielzahl von Netzknoten betrieben, wird. Dabei verwaltet jeder Netzknoten eine Tabelle, welche für die Netzknoten im Kommunikationsnetz jeweils einen Eintrag enthält, der zumindest einen Identitätswert und eine physikalische Adressen des jeweiligen Netzknotens umfasst. Jeder Netzknoten sendet regelmäßig Aktivitätsnachrichten an andere Netzknoten. Die Aktivitätsnachrichten enthalten den Identitätswert und die Adresse des jeweiligen Netzknotens. Ein empfangender Netzknoten synchronisiert seine Tabelle mit dem Inhalt der Aktivitäts-Nachricht. Eine zur Laufzeit bzw. beim Hochfahren der Automatisierungsanlage erfolgende Umsetzung von logischen Adressen in physikalische Adressen ist nicht offenbart.

Aufgabe der Erfindung ist es deshalb, ein Verfahren zum Einrichten eines Kommunikationsnetzes aus Geräten einer Automatisierungsanlage zu schaffen, mit dem auf einfache Weise im Rahmen des Engineerings der Automatisierungsanlage verwendete logische Adressen in physikalische Adressen gewandelt werden können, welche im Betrieb der Authentisierungsanlage genutzt werden.

Diese Aufgabe wird durch die unabhängigen Patentansprüche gelöst. Weiterbildungen der Erfindung sind in den abhängigen Ansprüchen definiert.

Das erfindungsgemäße Verfahren dient zum Einrichten eines Kommunikationsnetzes aus Geräten einer Automatisierungsanlage, wobei die Automatisierungsanlage basierend auf logischen Adressen der Geräte entworfen ist und wobei den Geräten physikalische Adressen zugeordnet sind, über welche die Geräte zum Austausch von Daten im Betrieb der Automatisierungsanlage über das Kommunikationsnetz angesprochen werden. Der Begriff des Einrichtens eines Kommunikationsnetzes ist hier und im Folgenden weit zu verstehen und betrifft nicht nur die anfängliche Initialisierung des Kommunikationsnetzes, sondern auch die Rekonfiguration des Kommunikationsnetzes bei der Initialisierung von neuen Geräten bzw. von Ersatzgeräten.

Im Rahmen des erfindungsgemäßen Verfahrens wird zwischen den Geräten ein (logisches) Overlay-Netz in der Form eines dezentralen Netzes aufgebaut. Der Begriff des dezentralen Netzes umfasst dabei jede Art von Peer-to-Peer-Netz. In diesem dezentralen Netz stellt jedes Gerät der Automatisierungsanlage einen Netzknoten dar, der für eine Anzahl an Schlüsseln zuständig ist, wobei in dem dezentralen Netz Ressourcen, welche durch einen jeweiligen, der Ressource zugeordneten Schlüssel und einen Ressourceninhalt spezifiziert sind, sowie Subskriptionen auf Ressourcen, welche durch einen jeweiligen, der Ressource zugeordneten Schlüssel und ein subskribierendes Gerät spezifiziert sind, veröffentlicht werden können. Die Veröffentlichung erfolgt dabei derart, dass auf demjenigen Netzknoten, der für den Schlüssel einer Ressource zuständig ist, die Ressource oder eine Subskription auf die Ressource veröffentlicht wird, wobei bei einer Subskription auf eine Ressource das subskribierende Gerät bei der Veröffentlichung einer Ressource mit dem Schlüssel der Subskription über den Ressourceninhalt informiert wird.

Erfindungsgemäß wird somit in an sich bekannter Weise ein dezentrales Netz zwischen den Geräte etabliert, wobei dieses Netz die aus dem Stand der Technik bekannten Mechanismen zum Veröffentlichen bzw. zum Abonnieren von Ressourcen zur Verfügung stellt. Der Mechanismus, wie im Rahmen einer Subskription der entsprechende Ressourceninhalt an den subskribierenden Netzknoten gelangt, kann dabei verschieden ausgestaltet sein. Insbesondere kann der Ressourceninhalt nach Veröffentlichung der Ressource sogleich mit einer entsprechenden Benachrichtigung übermittelt werden . Ebenso besteht die Möglichkeit, dass im Rahmen der Benachrichtigung der subskribierende Netzknoten nur über die Veröffentlichung der Ressource informiert wird, woraufhin der Netzknoten dann selbsttätig nach der Ressource sucht und den Ressourceninhalt als Suchergebnis erhält .

Das erfindungsgemäße Verfahren nutzt die oben beschriebenen Mechanismen eines dezentralen Overlay-Netzes in geeigneter Weise, um physikalische Adressen zwischen den Geräten bekannt zu machen. Dies geschieht im Rahmen der Initialisierung der einzelnen Geräte. Dabei wird ein Gerät bei dessen Initialisierung in das dezentrale Netz als Netzknoten aufgenommen und fungiert als erstes und/oder zweites Gerät, wobei im Betrieb der Automatisierungsanlage über das Kommunikationsnetz (d.h. bei der Kommunikation basierend auf entsprechenden physikalischen Adressen) Daten auf einem ersten Gerat an ein zweites Gerät zu senden sind oder Daten auf einem zweiten Gerät für ein erstes Gerät abzuholen sind. Im Rahmen des Sendens von Daten wird durch das erste Gerät bzw. einer diesem Gerät zugeordneten Einheit ein selbsttätiges Übermitteln der Daten an ein zweites Gerät bewirkt. Im Rahmen des Abholens von Daten werden die Daten durch ein erstes Gerät bzw. einer dem ersten Gerät zugeordneten Einheit von einem anderen zweiten Gerät abgerufen.

Im erfindungsgemäßen Verfahren wird bei der Initialisierung eines ersten Geräts eine Subskription auf eine Ressource mit einer logischen Adresse als Schlüssel und dem ersten Gerät als subskribierendes Gerät veröffentlicht, wobei das zweite Gerät, an das die Daten zu senden sind oder dessen Daten abzuholen sind, bei seiner Initialisierung eine Ressource mit der gleichen logischen Adresse als Schlüssel wie die logische Adresse gemäß der Subskription auf die Ressource bei der Initialisierung des ersten Geräts und mit der physikalischen Adresse des zweiten Geräts veröffentlicht. Der Begriff der Initialisierung eines Geräts ist weit zu verstehen und kann dabei des Einschalten eines im Kommunikationsnetz bereits vorhandenen Geräts bzw. die Neuaufnahme eines Geräts im Kommunikationsnetz bzw. auch die Aufnahme eines Ersatzgeräts beim Ausfall eines anderen Geräts im Kommunikationsnetz betreffen.

Mit der oben beschriebenen Veröffentlichung einer Subskription bzw. einer Ressource wird in geeigneter Weise sichergestellt, dass zwischen einem ersten und einem zweiten Gerät, zwischen denen Daten zu übertragen sind, eine geeignete Bekanntmachung von physikalischen Adressen basierend auf logischen Adressen erfolgt. Dabei wird automatisch mit aus dezentralen Overlay-Netzen bekannten Mechanismen die Abbildung von während des Engineerings der Anlage verwendeten logischen Adressen auf physikalische Adressen erreicht.

In einer bevorzugten Ausführungsform des erfindungsgemäßen Verfahrens veröffentlicht das erste Gerät bei seiner Initialisierung eine Subskription auf eine Ressource mit seiner eigenen logischen Adresse als Schlüssel, wobei das zweite Gerät, an das Daten auf dem ersten Gerät zu senden sind oder dessen Daten für das erste Gerät abzuholen sind, bei einer Initialisierung eine Ressource mit der logischen Adresse des ersten Geräts als Schlüssel und mit der physikalischen Adresse des zweiten Geräts als Ressourceninhalt veröffentlicht. Diese Variante kommt insbesondere dann zum Einsatz, wenn das erste Gerät die logische Adresse des zweiten Geräts nicht kennt.

In einer weiteren Ausführungsform des erfindungsgemäßen Verfahrens veröffentlicht das erste Gerät bei seiner Initialisierung eine Subskription auf eine Ressource mit der logischen Adresse des zweiten Geräts, an das Daten auf dem ersten Gerät zu senden sind oder dessen Daten (zur Bereitstellung) für das erste Gerät abzuholen sind, als Schlüssel, wobei das zweite Gerät bei seiner Initialisierung eine Ressource mit seiner logischen Adresse als Schlüssel und mit seiner physikalischen Adresse als Ressourceninhalt veröffentlicht. Diese Variante kommt insbesondere dann zum Einsatz, wenn das erste Gerät die logische Adresse des zweiten Geräts kennt.

In einer weiteren bevorzugten Ausführungsform wird das subskribierende Gerät in einer Subskription durch seine entsprechende physikalische Adresse spezifiziert.

In einer besonders bevorzugten Ausführungsform wird das erfindungsgemäße Verfahren in einer Automatisierungsanlage eingesetzt, welche als Geräte einen Sensor, einen Aktor und ein Steuergerät umfasst, wobei im Betrieb der Automatisierungsanlage basierend auf physikalischen Adressen zumindest eines Teils der Geräte Sensordaten auf dem Sensor an das Steuergerät zu senden sind oder für das Steuergerät abzuholen sind und Steuersignale basierend auf den Sensordaten (ausgehend) von dem Steuergerät und insbesondere durch das Steuergerät an den Aktor zu senden sind. Vorzugsweise verfügt das Steuergerät dabei über eine Kontrollfunktion, mit der basierend auf im Steuergerät empfangenen Sensordaten die an den Aktor zu sendenden Steuersignale ermittelt werden, wobei die Kontrollfunktion auf der logischen Adresse des Sensors und der logischen Adresse des Aktors basiert. Im Rahmen des Engineerings der Automatisierungsanlage wird somit eine Kontrollfunktion mit generischen logischen Adressen verwendet, die dann beim Einrichten des Kommunikationsnetzes für den Betrieb der Automatisierungsanlage auf physikalische Adressen abgebildet werden.

In einer besonders bevorzugten Ausführungsform des erfindungsgemäßen Verfahrens werden der Sensor und das Steuergerät für einen (Push-)Betrieb initialisiert, in dem Sensordaten auf dem Sensor an das Steuergerät selbsttätig durch den Sensor bzw. durch eine dem Sensor zugeordneten Einheit gesendet werden, wobei der Sensor bei seiner Initialisierung als erstes Gerät fungiert und eine Subskription auf eine Ressource mit seiner logischen Adresse als Schlüssel veröffentlicht und wobei das Steuergerät als zweites Gerät fungiert und eine Ressource mit der logischen Adresse des Sensors als Schlüssel und mit der physikalischen Adresse des Steuergeräts als Ressourceninhalt veröffentlicht.

In einer weiteren Variante des erfindungsgemäßen Verfahrens werden der Sensor und das Steuergerät für einen (Poll-) Betrieb initialisiert, in dem Sensordaten auf dem Sensor für das Steuergerät abgeholt werden, wobei das Abholen durch das Steuergerät bzw. eine dem Steuergerät zugeordnete Einheit vorzugsweise in regelmäßigen Abständen bewirkt wird. Dabei fungiert das Steuergerät bei seiner Initialisierung als erstes Gerät und veröffentlicht eine Subskription auf eine Ressource mit der logischen Adresse des Sensors als Schlüssel. Demgegenüber fungiert der Sensor als zweites Gerät und veröffentlicht eine Ressource mit seiner logischen Adresse als Schlüssel und mit seiner physikalischen Adresse als Ressourceninhalt. In dem oben dargelegten Push- bzw. Poll-Betrieb wird berücksichtigt, dass das Steuergerät die logische Adresse des Sensors kennt, der Sensor jedoch nicht zwangsläufig die logische Adresse des Steuergeräts kennen muss.

In einer weiteren, besonders bevorzugten Ausführungsform werden der Aktor und das Steuergerät für einen Betrieb initialisiert, in dem Steuersignale (ausgehend) von dem Steuergerät an den Aktor gesendet werden, wobei das Steuergerät bei seiner Initialisierung als erstes Gerät fungiert und eine Subskription auf eine Ressource mit der logischen Adresse des Aktors als Schlüssel veröffentlicht und wobei der Aktor als zweites Gerät fungiert und eine Ressource mit seiner logischen Adresse als Schlüssel und seiner physikalischen Adresse als Ressourceninhalt veröffentlicht. In dieser Variante sendet das Steuergerät bzw. eine dem Steuergerät zugeordnete Einheit selbsttätig entsprechende Steuersignale an den Aktor.

Das als Overlay-Netz verwendete dezentrale Netz kann beliebig ausgestaltet sein. In einer besonders bevorzugten Ausführungsform wird dabei ein auf einer verteilten Hash-Tabelle basierendes Peer-to-Peer-Netz eingesetzt, insbesondere der hinlänglich aus dem Stand der Technik bekannte Chord-Ring.

Im Rahmen der Kommunikation im Betrieb der Automatisierungsanlage können in dem Kommunikationsnetz zum Austausch von Daten beliebige Protokolle verwendet werden. Vorzugsweise basiert der Kommunikationsaustausch dabei auf Industrial Ethernet bzw. auf Profinet. Die physikalischen Adressen, welche im Rahmen der Kommunikation bei Betrieb der Automatisierungsanlage genutzt werden, können beispielsweise MAC-Adressen oder IP-Adressen sein.

Neben dem oben beschriebenen Verfahren zum Einrichten eines Kommunikationsnetzes betrifft die Erfindung ferner ein Kommunikationsnetz aus Geräten einer Automatisierungsanlage, wobei die Automatisierungsanlage basierend auf logischen Adressen der Geräte entworfen ist und wobei den Geräten physikalische Adressen zugeordnet sind, über welche die Geräte zum Austausch von Daten im Betrieb der Automatisierungsanlage über das Kommunikationsnetz angesprochen werden. Das Kommunikationsnetz ist dabei derart ausgestaltet, dass es mit dem erfindungsgemäßen Verfahren bzw. einer oder mehrerer Varianten des erfindungsgemäßen Verfahrens eingerichtet ist.

Die Erfindung betrifft darüber hinaus eine Automatisierungsanlage mit einer Mehrzahl von Geräten, wobei zwischen den Geräten das soeben beschriebene erfindungsgemäße Kommunikationsnetz gebildet ist.

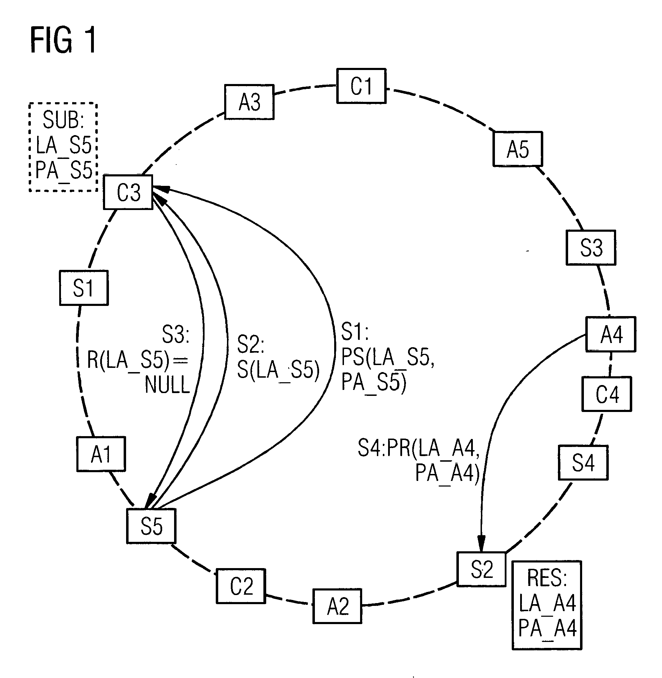

Ausführungsbeispiele der Erfindung werden nachfolgend anhand der beigefügten Fig. 1 bis 3 detailliert beschriebene. Diese Figuren zeigen in schematischer Darstellung den Ablauf einer Ausführungsform des erfindungsgemäßen Verfahrens zum Einrichten eines Kommunikationsnetzes zwischen Geräten einer Automatisierungsanlage.

Nachfolgend wird ein Ausführungsbeispiel der Erfindung basierend auf Geräten einer Automatisierungsanlage beschrieben, zwischen denen als Overlay-Netz ein Peer-to-Peer-Netz in der Form des hinlänglich aus dem Stand der Technik bekannten Chord-Rings aufgebaut ist. Dieser Ring ist in Fig. 1 bis Fig. 3 durch einen gestrichelten Kreis angedeutet, wobei die einzelnen Peers bzw. Knoten des Rings durch entsprechende Geräte der Automatisierungsanlage gebildet werden. Die Geräte umfassen dabei Sensoren, Aktoren und Steuergeräte. In Fig. 1 sind beispielhaft die Sensoren S1, S2, S3, S4 und S5, die Steuergeräte C1, C2, C3 und C4 sowie die Aktoren A1, A2, A3, A4 und A5 wiedergegeben. Der Chord-Ring basiert der auf einer sog. verteilten Hash-Tabelle DHT (DHT = Distributed Hash Table) mit einem ganzzahligen Identitätsbereich der Größe 2^{m}. Dieser Identitätsbereich wird durch den geschlossenen Ring repräsentiert, wobei jeder Knoten des Rings eine entsprechende Identität aus dem Identifikationsbereich repräsentiert. Jeder einzelne Knoten ist dabei für ein Intervall von Identitätswerten zuständig, die größer als der Identitätswert seines Vorgängerknotens und kleiner gleich sein eigene Identitätswert sind. Die Reihenfolge der Knoten entspricht in der Ausführungsform der Fig. 1 dem Uhrzeigersinn.

Mit an sich bekannten Mechanismen des Chord-Rings können Ressourcen mit entsprechenden Schlüsseln in den einzelnen Knoten hinterlegt bzw. veröffentlicht werden, wobei sich durch die Wandlung des Schlüssels mittels einer Hash-Funktion in einen Hash-Wert ein Identitätswert auf dem Chord-Ring ergibt. Derjenige Netzknoten, der für diesen Identitätswert zuständig ist, ist dann auch für die entsprechende Ressource verantwortlich. Neben dem Mechanismus des Veröffentlichens von Ressourcen wird erfindungsgemäß auch der Mechanismus der Subskription auf einer Ressource verwendet. Dabei kann sich ein Netzknoten auf eine Ressource mit einem entsprechenden Schlüssel subskribieren, wobei die Subskription auf demjenigen Netzknoten veröffentlicht wird, der für Ressource mit diesem Schlüssel zuständig ist. Werden Ressourcen mit diesem Schlüssel auf dem zuständigen Knoten veröffentlicht, führt eine entsprechende Subskription dazu, dass derjenige Netzknoten, der sich auf die Ressource subskribiert hat, über das Vorhandensein der Ressource informiert wird. Anschließend kann der Knoten, der über das Vorhandensein der Ressource informiert wurde, mittels eines an sich bekannten Look-ups nach der Ressource suchen und sich diese von dem Knoten abholen, auf dem sich die Ressource befindet. Gegebenenfalls kann die Ressource auch gleich mit der Information übermittelt werden, dass diese Ressource auf einem entsprechenden Netzknoten hinterlegt wurde.

Der soeben beschriebene Mechanismus des Veröffentlichens von Ressourcen und der Subskription auf Ressourcen ist hinlänglich für Peer-to-Peer-Systeme bekannt und wird auch als Publish-Subscribe-Mechanismus bezeichnet. Dieser Publish-Subscribe-Mechanismus wird in der hier beschriebenen Ausführungsform dazu genutzt, um die Zuordnung von logischen Adressen, basierend auf welchen die Automatisierungsanlage engineert wurde, zu physikalischen Adressen der einzelnen Geräte im Kommunikationsnetz bekannt zu machen. Die physikalischen Adressen sind dabei diejenigen Adressen, welche im Realbetrieb der Automatisierungsanlage zum Ansprechen der einzelnen Geräte verwendet werden und einen Echtzeit-Betrieb, z.B. basierend auf Industrial Ethernet, ermöglichen. Die physikalischen Adressen können je nach Ausgestaltung der Automatisierungsanlage MAC-Adressen, IP-Adressen oder ähnliches sein. Im Unterschied hierzu wurden die logischen Adressen lediglich beim Entwurf bzw. im Rahmen des Engineerings der Anlage verwendet, werden jedoch nicht im Realbetrieb der Anlage genutzt. Mit dem erfindungsgemäßen Verfahren wird hierbei erreicht, dass Automatisierungsanlagen generisch auf logischen Adressen designt werden können, wobei anschließend vor der Aufnahme des Realbetriebs die Zuordnung zwischen den logischen Adressen und den tatsächlichen physikalischen Adressen der Geräte vorgenommen wird und der Echtzeit-Betrieb der Anlage gewährleistet wird. Das Verfahren ist dabei derart ausgelegt, dass über die Verwendung eines Overlay-Netzes in einfacher Weise auch neu zur Automatisierungsanlage hinzugekommene bzw. andere Geräte ersetzenden Geräte über Publish-Subscribe-Mechanismen mit deren physikalischen Adressen bekannt gemacht werden können.

Im Folgenden wird eine Ausführungsform des erfindungsgemäßen Verfahrens basierend auf Fig. 1 bis Fig. 3 für eine Kommunikation zwischen Sensor S5, Steuergerät C1 und Aktor A4 beschrieben. Das Steuergerät C1 verarbeitet dabei Sensordaten des Sensors S5 mit Hilfe einer Kontrollfunktion und setzt entsprechende Sensordaten in Steuersignale für den Aktor A4 um. Wie bereits oben erwähnt, sind der Sensor S5, das Steuergerät C1 und der Aktor A4 Teil eines Chord-Rings, der über dem echtzeitfähigen Automatisierungsnetzwerk aufgespannt wird. Das Steuergerät, der Sensor und der Aktor sowie auch alle anderen Geräte in dem in Fig. 1 gezeigten Ring erhalten jeweils eine eindeutige Identität und speichern diejenigen Ressourcen oder Subskriptionen, für deren Schlüssel sie aufgrund ihrer Identität im Ring zuständig sind. Außerdem können die Steuergeräte, Sensoren und Aktoren als Clients des Peer-to-Peer-Netzes Ressourcen bzw. Subskriptionen wie oben beschrieben publizieren oder nach ihnen suchen. Die einzelnen Geräte können direkt an das Automatisierungsnetzwerk über entsprechende Kommunikationsnetzstellen angeschlossen sein und somit selbstständige kommunikationsfähige Einheiten bilden. Ebenso besteht ggf. die Möglichkeit, dass die Geräte mit anderen Komponenten fest verdrahtet sind, die ihrerseits an das Automatisierungsnetzwerk angeschlossen sind. Diese Komponenten fungieren dabei für die damit verdrahteten Geräte als sog. Proxies und steuern deren Kommunikation. Vorzugsweise sind solche Geräte, die lediglich indirekt über Proxies an das Automatisierungsnetz angebunden sind, preiswerte Sensoren bzw. Aktoren ohne eigene Kommunikationsfunktionalität.

Die einzelnen Steuergeräte, Sensoren und Aktoren können wiederum selbst in anderen Modulen bzw. Einheiten, bspw. in separaten Automatisierungsmodulen, integriert sein. Ein bevorzugter Anwendungsfall der Erfindung ist dabei die Kommunikation in einer modular aufgebauten Automatisierungsanlage, bei der die Automatisierungsanlage basierend auf separaten Automatisierungsmodulen entworfen wird und dann basierend auf diesen Automatisierungsmodulen zusammengebaut und geeignet konfiguriert wird.

Wie bereits oben erwähnt, weisen die einzelnen Geräte der Automatisierungsanlage bzw. die sie abstrahierende Dienste jeweilige logische Adressen auf, basierend auf denen die Kommunikation zwischen den Geräten beim Engineering der Anlage beschrieben wird. Dem Steuergerät C1 ist dabei die logische Adresse LA_C1 zugewiesen, dem Sensor S5 die logische Adresse LA_S5 und dem Aktor die logische Adresse LA_A4. Das Steuergerät C1 verwendet in an sich bekannter Weise eine Regelfunktion f_{controller}, mit der entsprechende Sensordaten des Sensors S5 in ein Steuersignal für den Aktor A4 umgesetzt werden. Das heißt, es gilt f_{controller} (SD) 〉̶ CS, wobei SD Sensordaten bzw. einen Sensorwert des Sensors S5 darstellen und CS ein daraus resultierendes Steuersignal für den Aktor A4. Im Rahmen des Wechselwirkens zwischen dem Steuergerät C1 und dem Sensor S5 bzw. dem Aktor A4 wird vorausgesetzt, dass der Sensor und der Aktor ihre eigenen logischen Adressen kennen. Ebenso kennt das Steuergerät seine eigene logische Adresse sowie die logischen Adressen des Sensors und des Aktors. Darüber hinaus kennen das Steuergerät, der Sensor und der Aktor ihre physikalischen Adressen. Die physikalische Adresse des Steuergeräts C1 wird im Folgenden mit PA_C1, die physikalische Adresse des Sensors S5 mit PA_S5 und die physikalische Adresse des Aktors A4 mit PA_A4 bezeichnet.

In den nachfolgend beschriebenen Figuren wird durch die Bezeichnung PR(key, val) eine Publikation einer Ressource mit dem Schlüssel key und dem Ressourceninhalt val bezeichnet. Ferner wird durch PS(key, res) die Publikation einer Subskription auf eine Ressource mit dem Schlüssel key mit der Antwortadresse res bezeichnet. S(key) bezeichnet die Suche nach der Ressource mit dem Schlüssel key. Ferner wird durch R(key) = xy das Ergebnis der Suche nach einer Ressource mit dem Schlüssel key spezifiziert. Mit N(key) wird die Benachrichtigung für eine Subskription auf eine Ressource mit dem Schlüssel key bezeichnet. Ferner werden in den Figuren durch eine, an einem Knoten angeordnete gestrichelte Box eine auf diesem Knoten veröffentlichte Subskription SUB und durch eine, über durchgezogene Linien dargestellte und an einem Knoten angeordnete Box eine entsprechende, auf dem Knoten hinterlegte Ressource RES spezifiziert.

Anhand von Fig. 1 bis Fig. 3 wird eine Variante des erfindungsgemäßen Verfahrens basierend auf einer sog. Push-Architektur erläutert, bei der im Betrieb der Automatisierungsanlage Sensordaten selbstständig von dem Sensor S5 an das Steuergerät C1 gesendet werden. Beim Einrichten der Kommunikationsbeziehungen ist es deshalb erforderlich, dass der Sensor S5 die physikalische Adresse des Steuergeräts C1 erhält. Im Folgenden wird erläutert, wie nach dem Initialisieren bzw. Einschalten des Steuergeräts C1, des Sensors S5 sowie des Aktors A4 die Kommunikationsbeziehungen zwischen diesen Geräten etabliert werden, wobei nach Einrichten dieser Beziehung dann eine Kommunikation zwischen den Geräten wie in einem herkömmlichen Industrial Ethernet erfolgt. Beim Einschalten des Sensors S5 publiziert dieser in Schritt S1 zunächst eine Subskription auf eine Ressource mit seiner logischen Adresse LA_S5 als Schlüssel, wobei er sich selbst als subskribierender Netzknoten über seine physikalische Adresse PA_S5 spezifiziert. In dem Szenario der Fig. 1 ist für den Schlüssel LA_S5 der Netzknoten C3 zuständig, so dass die Subskription auf diesem Netzknoten veröffentlicht wird. Anschließend sucht der Sensor S5 in Schritt S2 nach einer Ressource mit seiner logischen Adresse LA_S5 als Schlüssel, denn nach der Initialisierung ist ihm noch nicht bekannt, ob bereits eine Ressource mit dem Schlüssel LA_S5 im Peer-to-Peer-Netz hinterlegt ist. Diese Ressource wird erst dann veröffentlicht, wenn der Controller C1 eingeschaltet bzw. initialisiert wird. Dies ist im Szenario der Fig. 1 noch nicht der Fall, so dass ein leeres Suchergebnis NULL in Schritt S3 vom Steuergerät C3 an den Sensor S5 zurückgegeben wird. Nach dem Einschalten des Aktors A4 publiziert dieser im Peer-to-Peer-Netz eine normale Ressource mit seiner logischen Adresse LA_A4 als Schlüssel und seiner physikalischen Adresse PA_A4 als Ressourceninhalt (Schritt S4). Da in dem Szenario der Fig. 1 der Netzknoten S2 für den Schlüssel LA_A4 zuständig ist, erfolgt die Publikation auf diesem Netzknoten.

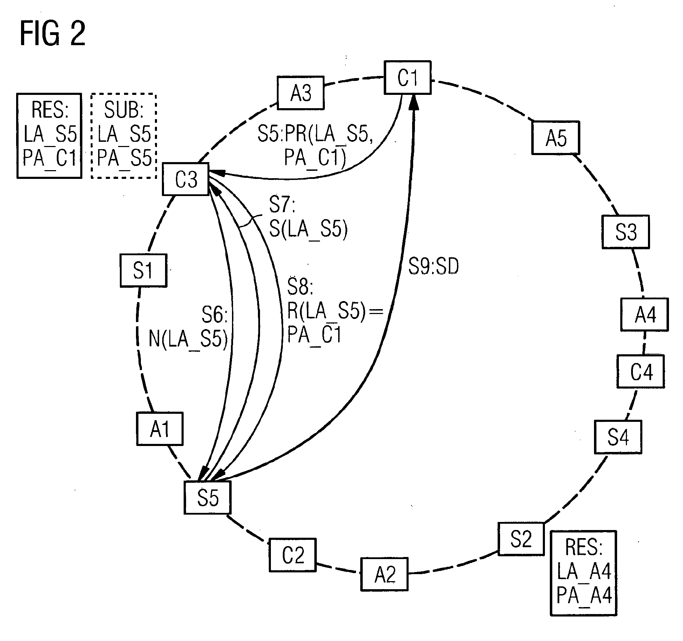

Das Verfahren setzt sich dann in Fig. 2 derart fort, dass auch das Steuergerät C1 eingeschaltet wird. Dieses analysiert seine Regelfunktion f_{controller} und stellt fest, dass Daten von dem mit Sensor S5 der logischen Adresse LA_S5 als Eingangsdaten benötigt werden, um basierend darauf Steuersignale an den Aktor A4 mit seiner logischen Adresse LA_A4 zu übermitteln. Die Kontrollfunktion, welche im Rahmen des Engineerings erstellt wurde, kennt dabei nur die logischen Adressen. Ziel des erfindungsgemäßen Verfahrens ist nunmehr die Bekanntmachung entsprechender physikalischer Adressen, so dass im Betrieb der Automatisierungsanlage in Echtzeit die entsprechenden Informationen übermittelt werden können. Das Steuergerät C1 publiziert nach dem Einschalten in Schritt S5 eine Ressource mit der logischen Adresse LA_S5 des Sensors S5 als Schlüssel und mit seiner physikalischen Adresse PA_C1 als Ressourceninhalt auf dem Knoten C3. Diese Publikation hat zur Folge, dass der Sensor S5 aufgrund seiner in Schritt S1 durchgeführten Subskription nunmehr über das Vorhandensein der in Schritt S5 hinterlegten Ressource informiert wird. Dies erfolgt über die im Schritt S6 übermittelte Benachrichtigung N (LA_S5). In der hier beschriebenen Ausführungsform wird mit der Benachrichtigung noch nicht der Inhalt der Ressource übermittelt. Deshalb sucht der Sensor S5 nach Empfang der Benachrichtigung in Schritt S7 nach der entsprechenden publizierten Ressource über ihren Schlüssel LA_S5. In Schritt S8 wird dann als Ergebnis der Ressourceninhalt in der Form der physikalischen Adresse PA_C1 des Steuergeräts C1 an den Sensor S5 zurückgegeben. Anschließend kann der Sensor S5 direkt über die physikalische Adresse PA_C1 in Echtzeit seine Sensordaten SD an das Steuergerät C1 übermitteln, wie durch Schritt S9 angedeutet ist.

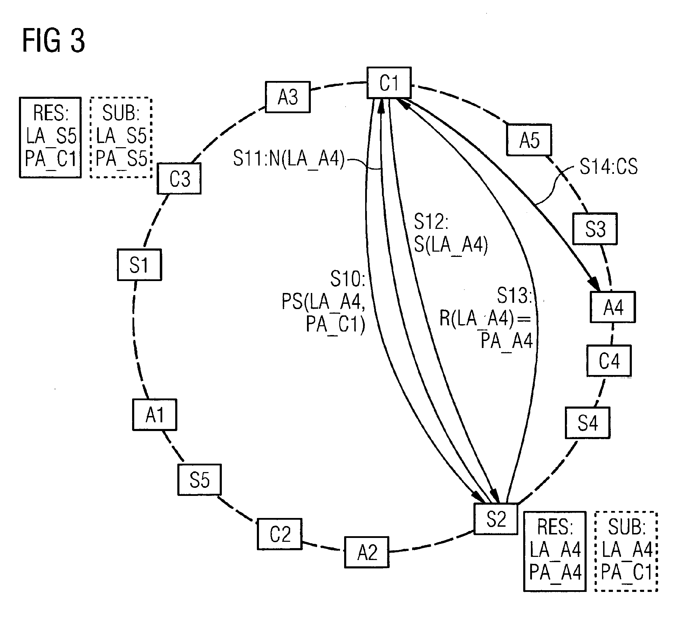

Wie sich aus Fig. 3 ergibt, publiziert das Steuergerät C1 bei seiner Initialisierung nicht nur eine Ressource mit der logischen Sensoradresse LA_S5 als Schlüssel, sondern auch eine Subskription auf einer Ressource mit der in der obigen Regelfunktion f_{controller} festgelegten logischen Adresse LA_A4 des Aktors A4 als Schlüssel. Dies erfolgt in Schritt S10. Da der Netzknoten S2 für die logische Adresse LA_A4 zuständig ist, findet die Veröffentlichung auf diesem Netzknoten statt. Diese Subskription stellt sicher, dass das Steuergerät C1 die physikalische Adresse des Aktors A4 auch erfahren kann, wenn der Aktor erst nach dem Steuergerät C1 eingeschaltet wird und seine physikalische Adresse dann unter der logischen Adresse publiziert (siehe obiger Schritt S4). Im Falle, dass der Aktor A4 somit nach dem Controller C1 initialisiert wird, erfolgt nach der Subskription in Schritt S10 die Übermittlung einer Benachrichtigung in Schritt S11, mit welcher das Steuergerät C1 darüber informiert wird, dass eine Ressource mit dem Schlüssel der logischen Aktoradresse LA_A4 auf dem Knoten S2 hinterlegt wurde. Daraufhin sucht das Steuergerät C1 im Schritt S12 nach dieser Ressource und erhält als Ergebnis in Schritt S13 die physikalische Adresse PA_A4 des Aktors A4, woraufhin das Steuergerät C1 die sich aus seiner Regelfunktion f_{controller} ergebenden Steuersignale CS an den Aktor A4 unter Verwendung dessen physikalischer Adresse übermitteln kann, wie durch den Schritt S14 angedeutet ist.

Sollte bei der Durchführung des Schritts S10 der Aktor A4 bereits eingeschaltet sein, so wird vom Steuergerät C1 selbsttätig eine Suche nach der Ressource mit der logischen Adresse LA_A4 veranlasst, so dass das Steuergerät C1 auch in diesem Fall die physikalische Adresse des Aktors empfängt. Gegebenenfalls besteht auch die Möglichkeit, dass die im Vorangegangenen beschriebenen Subskriptionen immer derart ausgestaltet sind, dass auch dann eine Benachrichtigung an den subskribierenden Netzknoten zurückgegeben wird, wenn beim Veröffentlichen der Subskription bereits eine entsprechend veröffentlichte Ressource auf dem Netzknoten vorhanden ist. In diesem Fall muss der subskribierende Knoten nach dem Veröffentlichung der Subskription nur bei Erhalt einer Benachrichtigung eine Suche veranlassen. Wie bereits oben erwähnt, kann auf die Suche auch ganz verzichtet werden, wenn in der entsprechenden Benachrichtigung zugleich der Ressourceninhalt mit übermittelt wird.

Sofern ein Steuergerät Daten aus mehreren logischen Sensoren benötigt oder Signale zu mehreren Aktoren übermitteln muss, so können die oben beschriebenen Schritte für jeden Sensor bzw. jeden Aktor durchgeführt werden. Sofern die Daten eines logischen Sensors von mehreren Steuergeräten benötigt werden, würde der Sensor aufgrund mehrfacher Publikationen durch verschiedene Steuergeräte über die physikalischen Adressen der unterschiedlichen Steuergeräte informiert werden, so dass er an all diese unterschiedlichen Steuergeräte seine Sensordaten schicken kann. Sobald ein Sensor die physikalische Adresse eines Steuergeräts kennt, kann ein beliebiges Applikationsprotokoll zwischen dem Sensor und dem Steuergerät, z.B. ein Protokoll zum Austausch von Kommunikationsparametern, initialisiert werden. Dieses Protokoll geht dem eigentlichen Versenden von Sensordaten heraus.

Im Rahmen der Kommunikation zwischen Steuergerät und Aktor können ggf. Steuersignale auch an mehrere Aktoren übermittelt werden, was dadurch erreicht wird, dass das Steuergerät für jede logische Adresse des Aktors eine Subskription publiziert. In Analogie zur Kommunikation zwischen Sensor und Steuergerät kann nach der Übermittlung der physikalischen Adresse des Aktors an das Steuergerät ein beliebiges Applikationsprotokoll zwischen dem Steuergerät und dem Aktor, z.B. zum Austausch von Kommunikationsparametern, etabliert werden. Dieses Protokoll geht dem eigentlichen Versenden der Steuersignale an den Aktor voraus.

Wird in der Automatisierungsanlage ein Sensor aufgrund eines Ausfalls durch einen neuen ersetzt, so stellt das erfindungsgemäße Verfahren sicher, dass der neue Sensor aufgrund der Subskription auf eine Ressource mit seiner eigenen logischen Sensoradresse als Schlüssel die physikalische Adresse des Steuergeräts erhält. Wird das Steuergerät durch ein neues Steuergerät ersetzt bzw. werden Aufgaben eines Steuergeräts durch ein Steuergerät eines anderen Automatisierungsmoduls übernommen, so stellt das oben beschriebene Verfahren sicher, dass durch die Publikation einer Ressource unter der logischen Adresse des Sensors die physikalische Adresse des neuen Steuergeräts dem Sensor mitgeteilt wird. Zudem kann ein neues Steuergerät über seine Subskription auf eine Ressource mit der logischen Adresse des Aktors die physikalische Adresse des Aktors erhalten.

Fällt ein Aktor in dem Kommunikationsnetz aus oder wird ein Aktor durch einen anderen Aktor mit einer anderen physikalischen Adresse ersetzt, so publiziert der neue Aktor eine neue physikalische Adresse über die Veröffentlichung einer entsprechenden Ressource seiner logischen Adresse als Schlüssel und seiner physikalischen Adresse als Ressourceninhalt. Da das Steuergerät eine Subskription auf die logische Aktoradresse hält, wird es darüber benachrichtigt und erhält somit die physikalische Adresse des neuen Aktors.

Im Vorangegangenen wurde anhand von Fig. 1 bis Fig. 3 eine Push-Architektur beschrieben, bei der der Sensor S5 von sich aus selbsttätig Sensordaten an das Steuergerät C1 übermittelt. In einer Abwandlung ist es auch möglich, dass anstatt einer Push-Architektur eine sog. Poll-Architektur eingesetzt wird, bei der das Steuergerät die Sensordaten beim Sensor abholt bzw. abfragt. In diesem Fall verhält sich der Sensor analog wie der Aktor im oben beschriebenen Verfahren. Im Folgenden werden die wesentlichen Schritte beim Einrichten von Kommunikationsbeziehungen in einer Poll-Architektur für den Sensor S5, das Steuergerät C1 und den Aktor A4 erläutert.

Wird der Sensor S5 eingeschaltet, so publiziert er im Peer-to-Peer-Netz anstatt einer Subskription eine normale Ressource mit seiner logischen Adresse LA_S5 als Schlüssel und seiner physikalischen Adresse PA_S5 als Ressourceninhalt. Der Aktor verhält sich analog wie in der Push-Architektur und publiziert im Netz beim Einschalten eine normale Ressource mit seiner logischen Adresse LA_A4 als Schlüssel und seiner physikalischen Adresse PA_A4 als Ressourceninhalt. Das Steuergerät analysiert nach dem Einschalten wiederum seine Regelfunktion f_{controller} und stellt fest, dass es Sensordaten aus dem Sensor S5 mit der logischen Adresse LA_S5 holen muss, um daraus entsprechende Steuersignale zu ermitteln, die es dann an den Aktor mit der logischen Adresse LA_A4 übermitteln muss. Um dies zu erreichen, publiziert das Steuergerät S5 im Netz eine Subskription mit der in der Regelfunktion festgelegten logische Sensoradresse LA_S5 als Schlüssel. Diese Subskription stellt sicher, dass das Steuergerät die physikalische Adresse des Sensors S5 auch erfahren kann, wenn der Sensor S5 erst nach dem Steuergerät eingeschaltet wird und seine physikalische Adresse dann unter der logischen Sensoradresse LA_S5 veröffentlicht.

Schließlich startet das Steuergerät C1 in dem Peer-to-Peer-Netz eine Suche nach einer Ressource mit der in der Regelfunktion festgelegten logischen Sensoradresse LA_S5. Sofern der Sensor S5 vor dem Steuergerät C1 gestartet wurde, erhält das Steuergerät als Ergebnis dieser Suche die vom Sensor publizierte Ressource mit der physikalischen Adresse des Sensors als Inhalt. Basierend auf dieser physikalischen Adresse kann dann im Rahmen der Poll-Architektur das Steuergerät fortan Sensordaten von dem Sensor S5 abholen. Sofern der Sensor S5 noch nicht gestartet wurde, muss das Steuergerät warten, bis es nach dem Start des Sensors eine Benachrichtigung auf seine Subskription erhält und hierüber dann die logische Adresse des Sensors S5 empfängt .

In Analogie zu dem Verfahren gemäß Fig. 1 bis Fig. 3 publiziert das Steuergerät C1 im Peer-to-Peer-Netz ferner eine Subskription mit der in seiner Regelfunktion f_{controller} festgelegten logischen Aktoradresse LA_A4 als Schlüssel. Diese Subskription stellt sicher, dass das Steuergerät die physikalische Adresse PA_A4 des Aktors A4 auch erfahren kann, wenn der Aktors erst nach dem Steuergerät eingeschaltet wird und seine physikalische Adresse dann unter der logischen Aktoradresse publiziert. Anschließend startet das Steuergerät im Peer-to-Peer-Netz eine Suche nach einer Ressource mit der in der Regelfunktion festgelegten logischen Aktoradresse LA_A4 als Schlüssel. Sofern der entsprechende Aktor vor dem Controller initialisiert wurde, erhält das Steuergerät als Ergebnis dieser Suche die vom Aktor publizierte Ressource mit der physikalischen Adresse des Aktors als Ressourceninhalt. An diese Aktoradresse kann dann das Steuergerät dann fortan seine Steuersignale schicken. Sofern der entsprechende Aktor noch nicht gestartet wurde, muss das Steuergerät warten, bis es nach dem Start des Aktors eine Benachrichtigung auf seine Subskription erhält und dann die physikalische Aktoradresse empfangen kann.

Die im Vorangegangenen beschriebenen Ausführungsformen des erfindungsgemäßen Verfahrens weisen eine Reihe von Vorteilen auf. Insbesondere können die im Rahmen des Engineerings der Automatisierungsanlage festgelegten logischen Adressen und Kommunikationsbeziehungen zwischen Geräten der Automatisierungsanlage beim Hochfahren derselben in physikalische Adressen aufgelöst werden und hierdurch dezidierte, echtzeitfähige physikalische Kommunikationsverbindungen etabliert werden. Somit müssen die physikalischen Adressen derjenigen Geräte, an welche Daten gesendet werden sollen oder von denen Daten geholt werden sollen, im Rahmen des Engineerings der Automatisierungsanlage nicht mehr konfiguriert werden, wodurch das Engineering vereinfacht wird. Entsprechende Sensoren und Aktoren in der Automatisierungsanlage müssen nur noch ihre logische Sensor- bzw. Aktoradresse sowie ihre eigene physikalische Adresse kennen. Ein Steuergerät muss nur noch seine eigene physikalische Adresse und die in seiner Regelfunktion enthaltenen logischen Sensor- und Aktoradressen kennen. Beim Ausfall eines Geräts in der Automatisierungsanlage kann dieses ohne Umkonfiguration anderer Elemente ersetzt werden, selbst dann, wenn das Ersatzgerät eine andere physikalischen Adresse aufweist. Beim Ausfall oder bei der Überlastung des Steuergeräts kann eine Regelfunktion auch durch ein anderes Steuergerät mit anderer physikalischer Adresse ausgeführt werden.

## Patentansprüche

1. Verfahren zum Einrichten eines Kommunikationsnetzes aus Geräten (C1, S5, A4) einer Automatisierungsanlage, wobei die Automatisierungsanlage basierend auf logischen Adressen (LA_C1, LA_S5, LA_A4) der Geräte (C1, S5, A4) entworfen ist und wobei den Geräten (C1, S5, A4) physikalische Adressen (PA_C1, PA_S5, PA_A4) zugeordnet sind, über welche die Geräte (C1, S5, A4) zum Austausch von Daten im Betrieb der Automatisierungsanlage über das Kommunikationsnetz angesprochen werden, wobei
zwischen den Geräten (C1, S5, A4) ein Overlay-Netz in der Form eines dezentralen Netzes aufgebaut wird, in dem jedes Gerät (C1, S5, A4) einen Netzknoten darstellt, der für eine Anzahl von Schlüsseln zuständig ist, wobei in dem dezentralen Netz Ressourcen, welche durch einen jeweiligen, der Ressource zugeordneten Schlüssel und einen Ressourceninhalt spezifiziert sind veröffentlicht werden können,
**dadurch gekennzeichnet, dass**
- in dem dezentralen Netz Subskriptionen auf Ressourcen, welche durch einen jeweiligen, der Ressource zugeordneten Schlüssel und ein subskribierendes Gerät (C1, S5, A4) spezifiziert sind, veröffentlicht werden können;
- zur Veröffentlichung einer Ressource auf demjenigen Netzknoten, der für den Schlüssel einer Ressource zuständig ist, die Ressource oder eine Subskription auf die Ressource veröffentlicht wird, wobei bei einer Subskription auf eine Ressource das subskribierende Gerät (C1, S5, A4) bei der Veröffentlichung einer Ressource mit dem Schlüssel der Subskription über den Ressourceninhalt informiert wird;
- ein Gerät (C1, S5, A4) bei dessen Initialisierung in das dezentrale Netz als Netzknoten aufgenommen wird und als erstes und/oder zweites Gerät fungiert, wobei im Betrieb der Automatisierungsanlage über das Kommunikationsnetz Daten auf einem ersten Gerät an ein zweites Gerät zu senden sind oder Daten auf einem zweiten Gerät für ein erstes Gerät abzuholen sind, wobei bei der Initialisierung eines ersten Geräts eine Subskription auf eine Ressource mit einer logischen Adresse (LA_C1, LA_S5, LA A4) als Schlüssel und dem ersten Gerät als subskribierendes Gerät veröffentlicht wird, wobei das zweite Gerät, an das die Daten zu senden sind oder dessen Daten abzuholen sind, bei seiner Initialisierung eine Ressource mit der gleichen logischen Adresse (LA_C1, LA_S5, LA_A4) als Schlüssel wie die logische Adresse (LA_C1, LA_S5, LA_A4) gemäß der Subskription auf die Ressource bei der Initialisierung des ersten Geräts und mit der physikalischen Adresse (PA_C1, PA_S5, PA_A4) des zweiten Geräts als Ressourceninhalt veröffentlicht.

2. Verfahren nach Anspruch 1, bei dem das erste Gerät bei seiner Initialisierung eine Subskription auf eine Ressource mit seiner logischen Adresse (LA_C1, LA_S5, LA_A4) als Schlüssel veröffentlicht, wobei das zweite Gerät, an das Daten auf dem ersten Gerät zu senden sind oder dessen Daten für das erste Gerät abzuholen sind, bei seiner Initialisierung eine Ressource mit der logischen Adresse (LA_C1, LA_S5, LA_A4) des ersten Geräts als Schlüssel und mit der physikalischen Adresse (PA_C1, PA_S5, PA_A4) des zweiten Geräts als Ressourceninhalt veröffentlicht.

3. Verfahren nach Anspruch 1 oder 2, bei dem das erste Gerät bei seiner Initialisierung eine Subskription auf eine Ressource mit der logischen Adresse (LA_C1, LA_S5, LA_A4) des zweiten Geräts, an das Daten auf dem ersten Gerät zu senden sind oder dessen Daten für das erste Gerät abzuholen sind, als Schlüssel veröffentlicht, wobei das zweite Gerät bei seiner Initialisierung eine Ressource mit seiner logischen Adresse (LA_C1, LA_S5, LA_A4) als Schlüssel und mit seiner physikalischen Adresse (PA_C1, PA_S5, PA_A4) als Ressourceninhalt veröffentlicht.

4. Verfahren nach einem der vorhergehenden Ansprüche, bei dem das subskribierende Gerät (C1, S5, A4) in einer Subskription durch seine physikalische Adresse spezifiziert wird.

5. Verfahren nach einem der vorhergehenden Ansprüche, bei dem das Verfahren in einer Automatisierungsanlage eingesetzt wird, welche als Geräte (C1, S5, A4) einen Sensor (S5), einen Aktor (A4) und ein Steuergerät (C1) umfasst, wobei im Betrieb der Automatisierungsanlage basierend auf physikalischen Adressen (PA_C1, PA_S5, PA_A4) zumindest eines Teils der Geräte (C1, S5, A4) Sensordaten (SD) auf dem Sensor (S5) an das Steuergerät zu senden sind oder für das Steuergerät abzuholen sind und Steuersignale (CS) basierend auf den Sensordaten (SD) von dem Steuergerät (C1) an den Aktor (A4) zu senden sind.

6. Verfahren nach Anspruch 5, **dadurch gekennzeichnet, dass** das Steuergerät (C1) über eine Kontrollfunktion verfügt, mit der basierend auf im Steuergerät (C1) empfangenen Sensordaten (SD) die an den Aktor (A4) zu sendenden Steuersignale (CS) ermittelt werden, wobei die Kontrollfunktion auf der logischen Adresse (LA_S5) des Sensors (S5) und der logischen Adresse (LA_A4) des Aktors (A4) basiert.

7. Verfahren nach Anspruch 5 oder 6, bei dem der Sensor (S5) und das Steuergerät (C1) für einen Betrieb initialisiert werden, in dem Sensordaten (SD) auf dem Sensor (S5) an das Steuergerät (C1) gesendet werden, wobei der Sensor (S5) bei seiner Initialisierung als erstes Gerät fungiert und eine Subskription auf eine Ressource mit seiner logischen Adresse (LA_S5) als Schlüssel veröffentlicht und wobei das Steuergerät (C1) als zweites Gerät fungiert und eine Ressource mit der logischen Adresse (LA_S5) des Sensors (S5) als Schlüssel und mit der physikalischen Adresse (PA_C1) des Steuergeräts (C1) als Ressourceninhalt veröffentlicht.

8. Verfahren nach einem der Ansprüche 5 bis 7, bei dem der Sensor (S5) und das Steuergerät (C1) für einen Betrieb initialisiert werden, in dem Sensordaten auf dem Sensor (S5) für das Steuergerät (C1) abgeholt werden, wobei das Steuergerät (C1) bei seiner Initialisierung als erstes Gerät fungiert und eine Subskription auf eine Ressource mit der logischen Adresse (LA_S5) des Sensors (S5) als Schlüssel veröffentlicht und wobei der Sensor (S5) als zweites Gerät fungiert und eine Ressource mit seiner logischen Adresse (LA_S5) als Schlüssel und mit seiner physikalischen Adresse (PA_S5) als Ressourceninhalt veröffentlicht.

9. Verfahren nach einem der Ansprüche 5 bis 8, bei dem der Aktor (S5) und das Steuergerät (C1) für einen Betrieb initialisiert werden, in dem Steuersignale (CS) von dem Steuergerät (C1) an den Aktor (A4) gesendet werden, wobei das Steuergerät (C1) bei seiner Initialisierung als erstes Gerät fungiert und eine Subskription auf eine Ressource mit der logischen Adresse (LA_A4) des Aktors (A4) als Schlüssel veröffentlicht und wobei der Aktor (A4) als zweites Gerät fungiert und eine Ressource mit seiner logischen Adresse als Schlüssel und seiner physikalischen Adresse (PA_A4) als Ressourceninhalt veröffentlicht.

10. Verfahren nach einem der vorhergehenden Ansprüche, bei dem das dezentrale Netz ein auf einer verteilten Hash-Tabelle basierendes Peer-to-Peer-Netz, insbesondere ein Chord-Ring, ist.

11. Verfahren nach einem der vorhergehenden Ansprüche, bei dem das Kommunikationsnetz zum Austausch von Daten im Betrieb der Automatisierungsanlage auf Industrial Ethernet oder Profinet basiert.

12. Verfahren nach einem der vorhergehenden Ansprüche, bei dem die physikalischen Adressen (PA_C1, PA_S5, PA_A4) der Geräte (C1, S5, A4) MAC-Adressen oder IP-Adressen sind.

13. Kommunikationsnetz aus Geräten (C1, S5, A4) einer Automatisierungsanlage, wobei die Automatisierungsanlage basierend auf logischen Adressen (LA_C1, LA_S5, LA_A4) der Geräte (C1, S5, A4) entworfen ist und wobei den Geräten (C1, S5, A4) physikalische Adressen (PA_C1, PA_S5, PA_A4) zugeordnet sind, über welche die Geräte (C1, S5, A4) zum Austausch von Daten im Betrieb der Automatisierungsanlage über das Kommunikationsnetz angesprochen werden, wobei das Kommunikationsnetz derart ausgestaltet ist, dass es mit einem Verfahren eingerichtet ist, bei dem zwischen den Geräten (C1, S5, A4) ein Overlay-Netz in der Form eines dezentralen Netzes aufgebaut wird, in dem jedes Gerät (C1, S5, A4) einen Netzknoten darstellt, der für eine Anzahl von Schlüsseln zuständig ist, wobei in dem dezentralen Netz Ressourcen, welche durch einen jeweiligen, der Ressource zugeordneten Schlüssel und einen Ressourceninhalt spezifiziert sind veröffentlicht werden können,
**dadurch gekennzeichnet,**
**dass** das Kommunikationsnetz mit einem Verfahren eingerichtet ist, bei dem
- in dem dezentralen Netz Subskriptionen auf Ressourcen, welche durch einen jeweiligen, der Ressource zugeordneten Schlüssel und ein subskribierendes Gerät (C1, S5, A4) spezifiziert sind, veröffentlicht werden können;
- zur Veröffentlichung einer Ressource auf demjenigen Netzknoten, der für den Schlüssel einer Ressource zuständig ist, die Ressource oder eine Subskription auf die Ressource veröffentlicht wird, wobei bei einer Subskription auf eine Ressource das subskribierende Gerät (C1, S5, A4) bei der Veröffentlichung einer Ressource mit dem Schlüssel der Subskription über den Ressourceninhalt informiert wird;
- ein Gerät (C1, S5, A4) bei dessen Initialisierung in das dezentrale Netz als Netzknoten aufgenommen wird und als erstes und/oder zweites Gerät fungiert, wobei im Betrieb der Automatisierungsanlage über das Kommunikationsnetz Daten auf einem ersten Gerät an ein zweites Gerät zu senden sind oder Daten auf einem zweiten Gerät für ein erstes Gerät abzuholen sind, wobei bei der Initialisierung eines ersten Geräts eine Subskription auf eine Ressource mit einer logischen Adresse (LA_C1, LA_S5, LA_A4) als Schlüssel und dem ersten Gerät als subskribierendes Gerät veröffentlicht wird, wobei das zweite Gerät, an das die Daten zu senden sind oder dessen Daten abzuholen sind, bei seiner Initialisierung eine Ressource mit der gleichen logischen Adresse (LA_C1, LA_S5, LA_A4) als Schlüssel wie die logische Adresse (LA_C1, LA_S5, LA_A4) gemäß der Subskription auf die Ressource bei der Initialisierung des ersten Geräts und mit der physikalischen Adresse (PA_C1, PA_S5, PA_A4) des zweiten Geräts als Ressourceninhalt veröffentlicht.

14. Kommunikationsnetz nach Anspruch 13, welches derart ausgestaltet ist, dass es mit einem Verfahren nach einem der Ansprüche 2 bis 12 eingerichtet ist.

15. Automatisierungsanlage mit einer Mehrzahl von Geräten (C1, S5, A4), wobei zwischen den Geräten (C1, S5, A4) ein Kommunikationsnetz nach Anspruch 13 oder 14 gebildet ist.

## Claims

1. A method for creating a communication network from devices (C1, S5, A4) of an automation system, wherein the automation system is designed on the basis of logical addresses (LA_C1, LA_S5, LA_A4) of the devices (C1, S5, A4) and wherein the devices (C1, S5, A4) are assigned physical addresses (PA_C1, PA_S5, PA_A4) via which the devices (C1, S5, A4) are addressed over the communication network for exchange of data during operation of the automation system, wherein
an overlay network in the form of a decentralised network is constructed between the devices (C1, S5, A4), in which each device (C1, S5, A4) represents a network node which is responsible for a number of keys, wherein resources which are specified by a respective key assigned to the resource and a resource content can be published in the decentralised network, **characterised in that**
- subscriptions to resources, which are specified by a respective key assigned to the resource and a subscribing device (C1, S5, A4) can be published in the decentralised network;
- for publication of a resource at that network node which is responsible for the key of a resource, the resource or a subscription to the resource is published, wherein for a subscription to a resource the subscribing device (C1, S5, A4) is informed about the resource content, on the publication of a resource, with the key of the subscription;
- a device (C1, S5, A4) which is accepted into the decentralised network as a network node during its initialisation and functions as first and/or second device, wherein, during operation of the automation system via the communication network, data at a first device is to be sent to a second device or data at a second device is to be fetched for a first device, wherein, during the initialisation of the first device, a subscription to a resource with a logical address (LA_C1, LA_S5, LA_A4) as key and the first device as subscribing device is published, wherein the second device to which the data is to be sent or the data of which is to be fetched, during its initialisation, publishes a resource with the same logical address (LA_C1, LA_S5, LA_A4) as key as the logical address (LA_C1, LA_S5, LA_A4) according to the subscription to the resource during the initialisation of the first device and with the physical address (PA_C1, PA_S5, PA_A4) of the second device as resource content.

2. Method according to claim 1, in which the first device, during its initialisation, publishes a subscription to a resource with its logical address (LA_C1, LA_S5, LA_A4) as key, wherein the second device to which data at the first device is to be sent or the data of which is to be fetched for the first device, publishes during its initialisation a resource with the logical address (LA_C1, LA_S5, LA_A4) of the first device as key and with the physical address (PA_C1, PA_S5, PA_A4) of the second device as resource content.

3. Method according to claim 1 or 2, in which the first device, during its initialisation, publishes a subscription to a resource with the logical address (LA_C1, LA_S5, LA_A4) of the second device to which data at the first device is to be sent or the data of which is to be fetched for the first device as a key, wherein the second device, during its initialisation, publishes a resource with its logical address (LA_C1, LA_S5, LA_A4) as key and with its physical address (PA_C1, PA_S5, PA_A4) as resource content.

4. Method according to one of the preceding claims, in which the subscribing device (C1, S5, A4) is specified in a subscription by its physical address.

5. The method as claimed in one of the previous claims, in which the method is used in an automation system which includes as devices (C1, S5, A4) a sensor (S5), an actuator (A4) and a controller (C1), wherein during operation of the automation system based on physical addresses (PA_C1, PA_S5, PA_A4) of at least some of the devices (C1, S5, A4), sensor data (SD) on the sensor (S5) is to be sent to the controller or is to be fetched for the controller and control signals (CS) based on the sensor data (SD) are to be sent from the controller (C1) to the actuator (A4).

6. Method according to claim 5, **characterised in that** the controller (C1) has a control function with which, on the basis of sensor data (SD) received in the controller (C1), the control signals (CS) to be sent to the actuator (A4) are determined, wherein the control function is based on the logical address (LA_S5) of the sensor (S5) and the logical address (LA_A4) of the actuator (A4).

7. Method according to claim 5 or 6, in which the sensor (S5) and the controller (C1) are initialised for operation in which sensor data (SD) on the sensor (S5) is sent to the controller (C1), wherein the sensor (S5), on its initialisation, functions as a first device and publishes a subscription to a resource with its logical address (LA_S5) as key and wherein the controller (C1) functions as the second device and publishes a resource with the logical address (LA_S5) of the sensor (S5) as key and with the physical address (PA_C1) of the controller (C1) as resource content.

8. Method according to one of claims 5 to 7, in which the sensor (S5) and the controller (C1) are initialised for operation in which sensor data on the sensor (S5) is retrieved for the controller (C1), wherein the controller (C1) on its initialisation, functions as first device and publishes a resource with the logical address (LA_S5) of the sensor (S5) as key and wherein the sensor (S5) functions as the second device and publishes a resource with its logical address (LA_S5) as key and with its physical address (PA_S5) as resource content.

9. Method according to one of claims 5 to 8, in which the actuator (S5) and the controller (C1) are initialised for operation in which control signals (CS) are sent from the controller (C1) to the actuator (A4), wherein the controller (C1), on its initialisation, functions as the first device and publishes a subscription to a resource with the logical address (LA_A4) of the actuator (A4) as key and wherein the actuator (A4) functions as the second device and publishes a resource with its logical address as key and its physical address (PA_A4) as resource content.

10. Method according to one of the preceding claims, in which the decentralised network is a peer-to-peer network based on a distributed hash table, especially a chord ring.

11. Method according to one of the preceding claims, in which the communication network for exchange of data during operation of the automation system is based on Industrial Ethernet or Profinet.

12. Method according to one of the preceding claims, in which the physical addresses (PA_C1, PA_S5, PA_A4) of the devices (C1, S5, A4) are MAC addresses or IP addresses.

13. Communication network comprising devices (C1, S5, A4) of an automation system, wherein the automation system is designed based on logical addresses, (LA_C1, LA_S5, LA_A4) of the devices (C1, S5, A4) and wherein the devices (C1, S5, A4) are assigned physical addresses (PA_C1, PA_S5, PA_A4) via which the devices (C1, S5, A4) are addressed for exchange of data over the communication network during operation of the automation system, wherein the communication network is designed such that it is created with a method in which an overlay network in the form of a decentralised network is constructed between the devices (C1, S5, A4), in which each device (C1, S5, A4) represents a network node which is responsible for a number of keys, wherein, in the decentralised network, resources which are specified by a respective key assigned to the resource and a resource content, can be published,
**characterised in that**
the communication network is configured with a method, in which
- subscriptions to resources which are specified by a respective key assigned to the resource and a subscribing device (C1, S5, A4) can be published in the decentralised network;
- to publish a resource at that network node which is responsible for the key of a resource, the resource or a subscription to the resource is published, wherein, wherein for a subscription to a resource the subscribing device (C1, S5, A4) is informed, on the publication of a resource, with the key of the subscription about the resource content;
- a device (C1, S5, A4) which is accepted during its initialisation into the decentralised network as a network node and functions as a first and/or second device wherein, during operation of the automation system, data at a first device is to be sent over the communication network to a second device or data at a second device is to be fetched for a first device wherein, during the initialisation of a first device, a subscription to a resource with a logical address (LA_C1, LA_S5, LA_A4) as key and the first device as subscribing device is published, wherein the second device to which the data is to be sent or of which data is to be fetched, in its initialisation, publishes a resource with the same logical address (LA_C1, LA_S5, LA_A4) as key as the logical address (LA-C1, LA_S5, LA_A4) in accordance with the subscription to the resource during the initialisation of the first device and with the physical address (PA_C1, PA_S5, PA_A4) of the second device as resource content.

14. Communication network according to claim 13, which is embodied so as to be constructed according to one of claims 2 to 12.

15. Automation system with a plurality of devices (C1, S5, A4), wherein a communication network according to claim 13 or 14 is formed between the devices (C1, S5, A4).

## Revendications

1. Procédé d'aménagement d'un réseau de communication composé d'appareils (C1, S5, A4) d'une installation d'automatisation, l'installation d'automatisation étant conçue sur la base d'adresses logiques (LA_C1, LA_S5, LA_A4) des appareils (C1, S5, A4), et des adresses physiques (PA_C1, PA_S5, PA_A4) via lesquelles les appareils (C1, S5, A4) sont contactés pour l'échange de données pendant le fonctionnement de l'installation d'automatisation via le réseau de communication étant associées aux appareils (C1, S5, A4),
un réseau de recouvrement étant établi entre les appareils (C1, S5, A4) sous la forme d'un réseau décentralisé dans lequel chaque appareil (C1, S5, A4) représente un noeud de réseau qui est compétent pour un nombre de clés, des ressources spécifiées par une clé respective associée à la ressource et par un contenu de ressource pouvant être publiées dans le réseau décentralisé, **caractérisé en ce que** :
- des souscriptions de ressources qui sont spécifiées par une clé respective associée à la ressource et un appareil souscripteur (C1, S5, A4) peuvent être publiées dans le réseau décentralisé ;
- aux fins de la publication d'une ressource sur le noeud de réseau qui est compétent pour la clé d'une ressource, la ressource ou une souscription de la ressource est publiée, l'appareil souscripteur (C1, S5, A4) étant, lors d'une souscription d'une ressource, informé du contenu de la ressource lors de la publication d'une ressource avec la clé de la souscription ;
- un appareil (C1, S5, A4) est admis dans le réseau décentralisé en tant que noeud de réseau lors de son initialisation et sert de premier et/ou de deuxième appareil, des données devant, via le réseau de communication et pendant le fonctionnement de l'installation d'automatisation, être envoyées à un deuxième appareil lorsqu'elles sont situées sur un premier appareil ou être appelées pour un premier appareil lorsqu'elles sont situées sur un deuxième appareil, une souscription d'une ressource étant publiée avec une adresse logique (LA_C1, LA_S5, LA_A4) en tant que clé et le premier appareil en tant qu'appareil souscripteur lors de l'initialisation d'un premier appareil, le deuxième appareil auquel les données doivent être envoyées ou dont les données doivent être appelées publiant, lors de son initialisation, une ressource avec la même adresse logique (LA_C1, LA_S5, LA_A4) en tant que clé que l'adresse logique (LA_C1, LA_S5, LA_A4) selon la souscription de la ressource lors de l'initialisation du premier appareil et avec l'adresse physique (PA_C1, PA_S5, PA_A4) du deuxième appareil en tant que contenu de ressource.

2. Procédé selon la revendication 1, selon lequel le premier appareil, lors de son initialisation, publie une souscription d'une ressource avec son adresse logique (LA_C1, LA_S5, LA_A4) en tant que clé, le deuxième appareil auquel des données situées sur le premier appareil doivent être envoyées ou dont les données doivent être appelées pour le premier appareil publiant, lors de son initialisation, une ressource avec l'adresse logique (LA_C1, LA_S5, LA_A4) du premier appareil en tant que clé et avec l'adresse physique (PA_C1, PA_S5, PA_A4) du deuxième appareil en tant que contenu de ressource.

3. Procédé selon la revendication 1 ou 2, selon lequel le premier appareil, lors de son initialisation, publie, en tant que clé, une souscription d'une ressource avec l'adresse logique (LA_C1, LA_S5, LA_A4) du deuxième appareil auquel des données situées sur le premier appareil doivent être envoyées ou dont les données doivent être appelées pour le premier appareil, le deuxième appareil, lors de son initialisation, publiant une ressource avec son adresse logique (LA_C1, LA_S5, LA_A4) en tant que clé et avec son adresse physique (PA_C1, PA_S4, PA_A4) en tant que contenu de ressource.

4. Procédé selon l'une des revendications précédentes, selon lequel l'appareil souscripteur (C1, S5, A4) est spécifié dans une souscription par son adresse physique.

5. Procédé selon l'une des revendications précédentes, selon lequel le procédé est mis en oeuvre dans une installation d'automatisation qui comprend, en tant qu'appareils (C1, S5, A4), un capteur (S5), un actionneur (A4) et un appareil de commande (C1) ; pendant le fonctionnement de l'installation d'automatisation, des données de capteur (SD) situées sur le capteur (S5) doivent, sur la base d'adresses physiques (PA_C1, PA_S5, PA_A4) d'au moins une partie des appareils (C1, S5, A4), être envoyées à l'appareil de commande ou être appelées pour l'appareil de commande et des signaux de commande (CS) doivent être envoyés de l'appareil de commande (C1) à l'actionneur (A4) sur la base des données de capteur (SD).

6. Procédé selon la revendication 5, **caractérisé en ce que** l'appareil de commande (C1) dispose d'une fonction de contrôle au moyen de laquelle les signaux de commande (CS) à envoyer à l'actionneur (A4) sont déterminés sur la base de données de capteur (SD) reçues dans l'appareil de commande (C1), la fonction de contrôle se basant sur l'adresse logique (LA_S5) du capteur (S5) et l'adresse logique (LA_A4) de l'actionneur (A4).

7. Procédé selon la revendication 5 ou 6, selon lequel le capteur (S5) et l'appareil de commande (C1) sont initialisés pour un fonctionnement selon lequel des données de capteur (SD) situées sur le capteur (S5) sont envoyées à l'appareil de commande (C1), le capteur (S5) servant de premier appareil lors de son initialisation et une souscription d'une ressource étant publiée avec son adresse logique (LA_S5) en tant que clé, et l'appareil de commande (C1) servant de deuxième appareil et publiant une ressource avec l'adresse logique (LA_S5) du capteur (S5) en tant que clé et avec l'adresse physique (PA_C1) de l'appareil de commande (C1) en tant que contenu de ressource.

8. Procédé selon l'une des revendications 5 à 7, selon lequel le capteur (S5) et l'appareil de commande (C1) sont initialisés pour un fonctionnement selon lequel des données de capteur situées sur le capteur (S5) sont appelées pour l'appareil de commande (C1), l'appareil de commande (C1) servant de premier appareil lors de son initialisation et publiant une souscription d'une ressource avec l'adresse logique (LA_S5) du capteur (S5) en tant que clé, et le capteur (S5) servant de deuxième appareil et publiant une ressource avec son adresse logique (LA_S5) en tant que clé et avec son adresse physique (PA_S5) en tant que contenu de ressource.

9. Procédé selon l'une des revendications 5 à 8, selon lequel l'actionneur (A4) et l'appareil de commande (C1) sont initialisés pour un fonctionnement selon lequel des signaux de commande (CS) sont envoyés de l'appareil de commande (C1) à l'actionneur (A4), l'appareil de commande (C1) servant de premier appareil lors de son initialisation et publiant une souscription d'une ressource avec l'adresse logique (LA_A4) de l'actionneur (A4) en tant que clé, et l'actionneur (A4) servant de deuxième appareil et publiant une ressource avec son adresse logique en tant que clé et avec son adresse physique (PA_A4) en tant que contenu de ressource.

10. Procédé selon l'une des revendications précédentes, selon lequel le réseau décentralisé est un réseau pair à pair basé sur une table de hachage distribuée, et plus particulièrement un anneau de Chord.

11. Procédé selon l'une des revendications précédentes, selon lequel le réseau de communication est basé sur Industrial Ethernet ou sur Profinet pour l'échange de données pendant le fonctionnement de l'installation d'automatisation.

12. Procédé selon l'une des revendications précédentes, selon lequel les adresses physiques (PA_C1, PA_S5, PA_A4) des appareils (C1, S5, A4) sont des adresses MAC ou des adresses IP.

13. Réseau de communication composé d'appareils (C1, S5, A4) d'une installation d'automatisation, l'installation d'automatisation étant conçue sur la base d'adresses logiques (LA_C1, LA_S5, LA_A4) des appareils (C1, S5, A4), et des adresses physiques (PA_C1, PA_S5, PA_A4) via lesquelles les appareils (C1, S5, A4) sont contactés pour l'échange de données pendant le fonctionnement de l'installation d'automatisation via le réseau de communication étant associées aux appareils (C1, S5, A4), le réseau de communication étant conçu de manière telle qu'il est aménagé avec un procédé selon lequel un réseau de recouvrement est établi entre les appareils (C1, S5, A4) sous la forme d'un réseau décentralisé dans lequel chaque appareil (C1, S5, A4) représente un noeud de réseau qui est compétent pour un nombre de clés, des ressources spécifiées par une clé respective associée à la ressource et par un contenu de ressource pouvant être publiées dans le réseau décentralisé, **caractérisé en ce que** le réseau de communication est aménagé avec un procédé selon lequel :
- des souscriptions de ressources qui sont spécifiées par une clé respective associée à la ressource et un appareil souscripteur (C1, S5, A4) peuvent être publiées dans le réseau décentralisé ;
- aux fins de la publication d'une ressource sur le noeud de réseau qui est compétent pour la clé d'une ressource, la ressource ou une souscription de la ressource est publiée, l'appareil souscripteur (C1, S5, A4) étant, lors d'une souscription d'une ressource, informé du contenu de la ressource lors de la publication d'une ressource avec la clé de la souscription ;
- un appareil (C1, S5, A4) est admis dans le réseau décentralisé en tant que noeud de réseau lors de son initialisation et sert de premier et/ou de deuxième appareil, des données devant, via le réseau de communication et pendant le fonctionnement de l'installation d'automatisation, être envoyées à un deuxième appareil lorsqu'elles sont situées sur un premier appareil ou être appelées pour un premier appareil lorsqu'elles sont situées sur un deuxième appareil, une souscription d'une ressource étant publiée avec une adresse logique (LA_C1, LA_S5, LA_A4) en tant que clé et le premier appareil en tant qu'appareil souscripteur lors de l'initialisation d'un premier appareil, le deuxième appareil auquel les données doivent être envoyées ou dont les données doivent être appelées publiant, lors de son initialisation, une ressource avec la même adresse logique (LA_C1, LA_S5, LA_A4) en tant que clé que l'adresse logique (LA_C1, LA_S5, LA_A4) selon la souscription de la ressource lors de l'initialisation du premier appareil et avec l'adresse physique (PA_C1, PA_S5, PA_A4) du deuxième appareil en tant que contenu de ressource.

14. Réseau de communication selon la revendication 13, conçu de manière telle qu'il est aménagé avec un procédé selon l'une des revendications 2 à 12.

15. Installation d'automatisation comportant une pluralité d'appareils (C1, S5, A4), un réseau de communication selon la revendication 13 ou 14 étant formé entre les appareils (C1, S5, A4).
